# EUROPÄISCHE PATENTSCHRIFT

(11) **EP 2 687 279 B1**
(45) Veröffentlichungstag und Bekanntmachung des Hinweises auf die Patenterteilung: **27.06.2018**
(21) Anmeldenummer: 12176847.7
(22) Anmeldetag: 18.07.2012
(51) Int. Cl.: B01D 29/27

(54) **Gehäuse für einen Einwegbeutelfilter**
Casing for a disposable bag filter
Boîtier pour un filtre de sachets à utilisation unique

(43) Veröffentlichungstag der Anmeldung: 22.01.2014
(73) Patentinhaber: Fraunhofer-Gesellschaft zur Förderung der angewandten Forschung e.V., 80686 München (DE); Rheinisch-Westfälische Technische Hochschule Aachen (RWTH), 52062 Aachen (DE)
(72) Erfinder: Buyel, Johannes Felix, 41812 Erkelenz (DE)
(74) Vertreter: dompatent von Kreisler Selting Werner - Partnerschaft von Patent- und Rechtsanwälten mbB

(56) Entgegenhaltungen:
- WO-A1-2012/024128
- FR-A1- 2 804 881
- US-A- 3 765 536
- US-A- 4 552 661
- US-A- 5 338 446
- US-A1- 2010 264 100

## Beschreibung

Die Erfindung betrifft ein Gehäuse für einen Einwegbeutelfilter zum Filtern von dispergierten Partikeln aus einer trüben Lösung, die nicht mit der Umgebung des Filters in Kontakt kommen darf.

Ein Filtern von dispergierten Partikeln aus einer trüben Lösung kann bspw. bei der Herstellung von Pharmaka notwendig sein. Hierbei kann es vorkommen, dass das Filtrationsprodukt nicht mit Stoffen aus vorherigen Prozessen oder der Umgebung in Kontakt kommen darf. Bei der zu filternden Lösung kann es sich bspw. um eine radioaktiv belastete Lösung oder einen Schlamm handeln. Ferner kann es sich hierbei um potenziell infektiöses Material handeln. Bei der Herstellung von Pharmaka kann es sich ferner um proteinhaltige Lösungen handeln. Die Lösung kann ferner einen hohen Feststoffgehalt aufweisen und z.B. ein Pflanzenextrakt sein.

Derartige trübe Lösungen müssen häufig vor ihrer Weiterverarbeitung oder Entsorgung von dispergierten Partikeln befreit werden, da diese Stoffe Probleme in späteren Prozessschritten verursachen können. Zu diesen Problemen zählt unter anderem das Verstopfen von Säulen zur chromatographischen Trennung der Inhaltsstoffe. Eine effektive und kostengünstige Methode zur Partikelentfernung, die aus dem Stand der Technik bekannt ist, stellt die Beutelfiltration dar. Hierzu werden Beutelfilter in entsprechende Halterungen eingesetzt. Die Filter werden nach Erreichen der Filterstandzeit, zumeist nach einmaliger Verwendung, entsorgt. Die Halterungen dagegen sind häufig aus Edelstahl oder ähnlichen Materialien gefertigt und für den dauerhaften Einsatz konzipiert. Sie müssen daher regelmäßig gereinigt werden. Die Reinigung dieser Gehäuse erzeugt beim Einsatz in der biopharmazeutischen Produktion einen hohen Arbeit- und Dokumentationsaufwand. Es muss zum einen sichergestellt werden, dass keine Rückstände aus einem abgeschlossenen Prozess in einen nachfolgenden Prozess übertragen werden. Zum anderen muss sichergestellt werden, dass im Verlauf der Reinigung der Halterung kein potenziell infektiöses oder gentechnisch verändertes Material in die Umwelt freigesetzt wird.

Halterungen für die beschriebenen Filter werden derzeit mit zum Teil aggressiven Chemikalien, wie konzentrierter Natronlauge gereinigt.

US 3,765,536 beschreibt ein Gehäuse mit einem hierin befindlichen Einwegbeutelfilter zum Filtern von menschlichem Blut.

Weitere ähnliche Filter sind bekannt aus FR 2 804 881, US 5,338,446 und US 4,552,661.

Aufgabe der Erfindung ist es ein Gehäuse für einen Einwegbeutelfilter zum Filtern von dispergierten Partikeln aus einer trüben Lösung zu schaffen, das einfach herstellbar und einfach zu handhaben ist.

Die Lösung der Aufgabe erfolgt erfindungsgemäß durch die Merkmale des Anspruchs 1.

Das erfindungsgemäße Gehäuse nimmt einen Einwegbeutelfilter auf, durch den dispergierte Partikel aus einer trüben Lösung, die nicht mit der Umgebung des Filters in Kontakt kommen darf, gefiltert werden.

Erfindungsgemäß ist das Gehäuse als Einweggehäuse ausgebildet, das nach einmaligem Gebrauch zum Entsorgen bestimmt ist.

Erfindungsgemäß kann somit das aufwendige Reinigen des Filtergehäuses entfallen. Ferner wird auf sehr einfache Weise sichergestellt, dass aus einem vorherigen Prozess keine Stoffe in einem späteren Prozess, in dem das gleiche Filtergehäuse verwendet wird, gelangen. Die Sicherheit und Qualität des Produktes, nämlich des Filtrates kann somit verbessert werden.

Es ist bevorzugt, dass der Einwegbeutelfilter einstückig mit dem Einweggehäuse ausgebildet ist. Das Einweggehäuse wird somit komplett mit dem Einwegbeutelfilter geliefert und kann als Einheit zur Durchführung der Filtration verwendet werden. Nach Abschluss der Filtration wird das Einweggehäuse zusammen mit dem Einwegbeutelfilter entsorgt. Eine Entsorgung kann bspw. durch Verbrennung oder Autoklavieren erfolgen.

Alternativ ist es möglich, dass das Einweggehäuse und der Einwegbeutelfilter zweistückig ausgebildet sind. Hierfür weist das Einweggehäuse eine Befestigungsvorrichtung zum Befestigen eines konventionellen Einwegbeutelfilters im Inneren des Einweggehäuses auf. Diese Befestigungsvorrichtung kann derart ausgestaltet sein, dass Beutelfilter einer bestimmten Größe im Inneren des Gehäuses befestigt werden können. Alternativ kann ein Befestigungsadapter verwendet werden, der insbesondere austauschbar sein kann. Durch diesen Adapter ist es möglich, Einwegbeutelfilter verschiedener Hersteller und/oder Größen im Einweggehäuse zu befestigen. Somit bietet das erfindungsgemäße Einwegfiltergehäuse die Möglichkeit jeden beliebigen auf dem Markt verfügbaren Beutelfilter zu verwenden, ohne dass eine aufwendige Reinigung des Gehäuses notwendig wäre. Hierdurch entfällt ein Wechsel des Filterherstellers, was z.B. in stark regulierten Prozessen zur Herstellung von Biopharmazeutika ein Problem darstellen könnte. Der modulare Aufbau bestehend aus einem separaten Einweggehäuse und einem separaten Einwegbeutelfilter stellt gegenüber aus dem Stand der Technik bekannten Lösungen einen wesentlichen Vorteil dar, da bei diesen bekannten Lösungen bereits im Fertigungsprozess festgelegt werden muss, welcher Filter verwendet werden soll. Eine Anpassung an einen gewünschten Filtertyp, bspw. auch im Hinblick auf besondere Filtereigenschaften, ist zu einem späteren Zeitpunkt nicht mehr möglich.

Es ist bevorzugt, dass das Einweggehäuse eine flexible Außenwand und ferner mindestens ein Versteifungselement zum Versteifen der flexiblen Außenwand aufweist. Die Außenwand kann bspw. aus einem wenigstens teilweise durchsichtigen Kunststoff ausgestaltet sein. Erfindungsgemäß ist die flexible Außenwand dünnwandig ausgebildet und weist eine materialabhängige Stärke auf, die für einen Betriebsdruck von ca. 2 bis 10 bar über dem Umgebungsdruck geeignet ist. Hierdurch ist eine besonders preisgünstige Herstellung des Filtergehäuses möglich. In der genannten Ausführungsform dient die Außenwand des Gehäuses somit nicht zur Versteifung des Gehäuses. Diese Aufgabe wird durch ein separates Versteifungselement erfüllt. Hierbei handelt es sich um einen steifen Filterkorb, der den Beutelfilter umgibt und zwischen diesem und flexiblen Außenwand angeordnet ist.

Als Versteifungselement kann ferner eine steife Einlasskappe, das Gewebe des Beutelfilters selbst und/oder ein Spreizring an mindestens einem Ende der flexiblen Außenwand verwendet werden.

Bei dem Versteifungselement kann es sich ferner um ein steifes, insbesondere rohrförmiges Außengehäuse handeln, in das das flexible Einweggehäuse und der flexible Einwegbeutelfilter zum Durchführen der Filtration eingeführt werden. Beispielsweise kann hierzu die Einlasskappe ein Gewinde aufweisen, das in ein weiteres Gewinde im rohrförmigen Außengehäuse geschraubt werden kann. Das steife Außengehäuse kann somit ähnlich einem Exo-Skelett den Hauptteil des Arbeitsdruckes aufnehmen, sodass es möglich ist, das flexible Einweggehäuse noch dünnwandiger zu fertigen. Das steife Außengehäuse wäre somit wiederverwendbar, ähnlich wie die Gehäuse, die aus dem Stand der Technik bekannt sind. Jedoch kommt in dieser Ausführungsform der Erfindung das steife Außengehäuse mit der zu filternden Lösung nicht in Kontakt, sodass es nicht verunreinigt wird. Zwischen dem steifen Außengehäuse und dem Einwegbeutelfilter und der Lösung befindet sich das flexible Einweggehäuse, das eine Verunreinigung des steifen Außengehäuses verhindert.

Nach Durchführung der Filtration ist es möglich, das flexible Einweggehäuse einschließlich es hierin befindlichen flexiblen Einwegbeutelfilters aus dem steifen Außengehäuse zu entfernen. Im Rahmen eines Verfahrens kann dann der in dem flexiblen Einweggehäuse befindliche Einwegbeutelfilter nach Benutzung ausgepresst werden, sodann die noch hierin befindliche Restflüssigkeit rückgewonnen werden kann. Das Auspressen erfolgt durch Aufbringen einer äußeren Kraft durch eine Auspressvorrichtung, insbesondere durch Auspresswalzen auf das Einweggehäuse. Hierbei berührt die Auspressvorrichtung lediglich die Außenseite des Einweggehäuses, nicht jedoch den Einwegbeutelfilter oder die zu filternde Lösung selbst. Das beschriebene Auspressverfahren kann auch unabhängig von der dargestellten Ausführungsform mit dem steifen Außengehäuse angewandt werden.
Der Filterkorb kann bspw. mit dem unteren Ende der Einlasskappe verschweißt sein oder mit dieser einstückig ausgebildet sein. Der Filterkorb dient dazu, das Gewebe des Filters bei hohen Betriebsdrücken zu unterstützen, um so ein mögliches Reißen des Filtergewebes zu verhindern. Außerdem wird durch den Filterkorb ein direkter Kontakt zwischen der Außenwand des Gehäuses und dem Filter vermieden. Dies stellt einen ungestörten Ablauf der Filtration sicher, da durch ein Anlegen des Filters an die Außenwand des Gehäuses die Durchtrittsfläche des Filters verringert würde, was zu einer geringeren Filterleistung führt.
Der Spreizring kann bspw. am unteren Ende der flexiblen Außenwand angeordnet sein und aus Kunststoff, Metall oder Gummi ausgebildet sein. Auch hierdurch kann das oben beschriebene Anliegen des Filtergewebes an der Außenwand verhindert werden. Der Spreizring kann sich auch außerhalb der flexiblen Außenwand befinden und bspw. über Laschen mit dieser verbunden sein. Hierdurch werden ein platzsparender Transport und eine einfachere Fertigung ermöglicht. Das Einmalgehäuse weist einen Einlass und einen Auslass zum Ein- und Auslassen der zu filternden Lösung auf. Hierbei kann der Ein- und/oder Auslass mittels einer Verschließvorrichtung derart verschließbar sein, dass nach Durchführen der Filtration keine Lösung aus dem Inneren des Einweggehäuses nach außen entweichen kann. Bei der Verschließvorrichtung kann es sich bspw. um einen Sperrhahn oder ein Ventil handeln. Bei dem Einlass und Auslass kann es sich bspw. um ein Triclamp handeln. Im Bereich der Einlasskappe und/oder des Auslasses können zudem zusätzliche Anschlüsse bspw. für pH-Sonden, Belüftungsventile oder ähnliches vorgesehen sein.
Die Einlasskappe kann an ihrem unteren Ende mit dem Gewebe des Beutelfilters verschweißt sein. Einlasskappe, Beutelfilter und Schweißnaht sind hierbei derart ausgeführt, dass sie einem erforderlichen maximalen Betriebsdruck standhalten können. Der maximale Betriebsdruck kann je nach Anwendung variieren und beträgt 2 bis 10 bar über Umgebungsdruck. Auch die flexible Außenwand des Gehäuses kann mit der Einlasskappe und ferner mit dem Auslassgehäuse verschweißt sein.
In einer alternativen Ausführungsform weist das Einmalgehäuse eine zweitteilige Einlasskappe auf, wobei sich das Einlasskappenoberteil in Richtung des Beutelfilters weitet und sich zu einer Scheibe verbreitert. Die Einlassseite des Einlasskappenunterteils ist ebenfalls scheibenförmig ausgebildet und weist eine insbesondere ringförmige Vertiefung oder eine andere Befestigungsvorrichtung zur Befestigung eines konventionellen Einwegbeutelfilters auf.
In dieser Ausführungsform ist es bevorzugt, dass das scheibenförmige Einlasskappenoberteil und -unterteil eine Vertiefung aufweisen, in die eine Dichtung aufgenommen ist.

Weiterhin können in dieser Ausführungsform das Einlasskappenoberteil und - unterteil durch eine Verbindungsvorrichtung, insbesondere durch eine Schelle, (Flügel-) Schrauben, Klammern, o.ä. mechanisch miteinander verbunden sein, sodass eine Fixierung der Dichtung und des Einwegbeutelfilters zwischen ihnen erfolgt.

Die beiden Teile der Einlasskappe sind vorzugsweise aus Kunststoff gefertigt, um die Produktionskosten gering zu halten. Es sind aber auch Metalle oder andere Materialien verwendbar. Das Einlasskappenoberteil der beschriebenen Ausführungsform kann als ein wiederverwendbares Teil ausgeführt sein und stellt somit in dieser Ausführungsform keinen Teil des Einweggehäuses dar.

Die Einlasskappe des Gehäuses kann sich in Richtung des Beutelfilters weiten und insbesondere konisch oder domartig ausgebildet sein. Bei Verwendung eines Adapters, der den Gebrauch verschiedener konventionell erhältlicher Beutelfilter erlaubt, ist ein Austausch der Einlasskappe nicht notwendig. Vielmehr ist für die Verwendung der verschiedenen Filtertypen lediglich ein Austausch des Adapters notwendig.

Im Folgenden werden bevorzugte Ausführungsformen der Erfindung anhand von Figuren erläutert.

Es zeigen:
- Fig. 1: eine erste Ausführungsform der erfindungsgemäßen Vorrichtung,
- Fig. 2: eine zweite Ausführungsform der erfindungsgemäßen Vorrichtung.

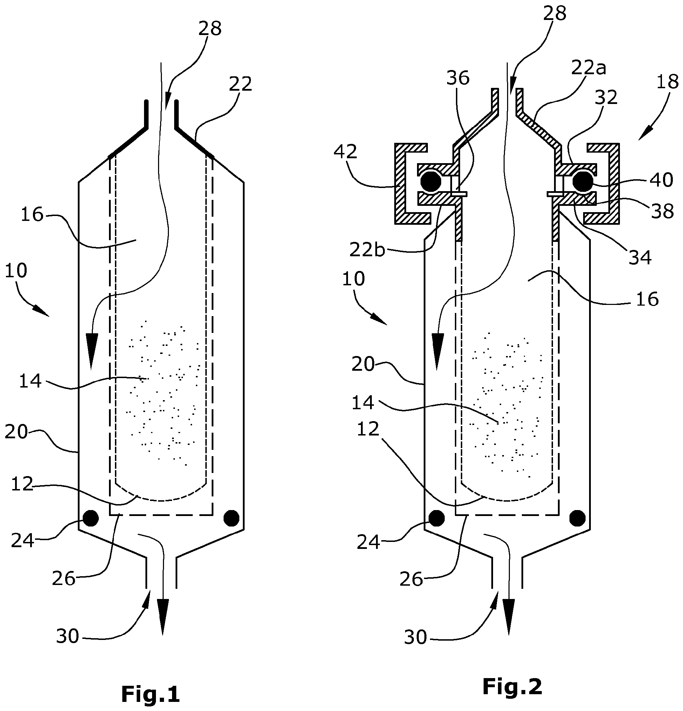

Gemäß Fig. 1 ist das Einweggehäuse 10 einstückig mit dem Einwegbeutelfilter 12 ausgebildet. Zwischen dem Beutelfilter 12 und der Außenwand 20 des Gehäuses 10 ist ein steifer Filterkorb 26 angeordnet. Unter steif wird in diesem Zusammenhang verstanden, dass der Filterkorb steifer als die flexible Außenwand 20 ausgebildet ist und somit zu ihrer Versteifung beitragen kann. Selbiges gilt für die weiteren Versteifungselemente, bspw. den Spreizring 24, die steife Einlasskappe 22 oder das Gewebe des Einwegbeutelfilters 12 an sich.

Im Rahmen der Filtration wird die zu filternde Lösung 16 über den Einlass 28 dem Inneren des Gehäuses 10 zugeführt. Die in der Lösung 16 befindlichen Partikel 14 werden durch den Filter 12 zurückgehalten, während das Filtrat das Gehäuse 10 über den Auslass 30 verlässt und der weiteren Verarbeitung zugeführt wird.

Die Ausführungsform gemäß Fig. 2 unterscheidet sich von der Ausführungsform gemäß Fig. 1 dadurch, dass das Filtergehäuse 10 und der Einwegbeutelfilter 12 zweistückig ausgebildet sind. Hierzu ist die Einlasskappe 22 zweistückig ausgebildet und weist eine Einlasskappenoberseite 22a und eine Einlasskappenunterseite 22b auf. Die Einlasskappenoberseite 22a verbreitert sich ausgehend vom Einlass 28 in Richtung des Beutelfilters 12, sodass sie in ihrem unteren Bereich 32 scheibenförmig ausgebildet ist. Entsprechend ist die Einlasskappenunterseite 22b in ihrem Bereich, der dem Einlass zugewandt ist, ebenfalls scheibenförmig ausgebildet. In diesem Bereich 34 weist die Einlasskappenunterseite 22b eine Vertiefung 38 auf, in die eine Dichtung 40 aufgenommen ist, durch die das Gehäuse 10 hermetisch nach außen verschlossen wird. Die Einlasskappenoberseite 22a kann eine ähnliche Vertiefung aufweisen.

Weiterhin weist die Einlasskappenunterseite 22b ausgehend von der Dichtung 40 in radialer Richtung nach innen eine als eine zweite Vertiefung 36 ausgebildete Befestigungsvorrichtung zum Befestigen des Beutelfilters 12 im Inneren des Gehäuses 10 auf.

Die Einlasskappenoberseite 22a und die Einlasskappenunterseite 22b sind über eine Schelle 42 mechanisch miteinander verbunden, sodass eine Fixierung der Dichtung 40 und des Einwegbeutelfilters 12 zwischen ihnen erfolgt. Mit dem Bezugszeichen 18 ist die Befestigungsvorrichtung bezeichnet, die dem Befestigen eines konventionellen Einwegbeutelfilters 12 im Inneren des Einweggehäuses dient und die die Scheiben 32,34 und die Schelle 42 umfasst.

## Patentansprüche

1. Gehäuse für einen Einwegbeutelfilter (12) zum Filtern von dispergierten Partikeln (14) aus einer trüben Lösung (16), die nicht mit der Umgebung des Filters in Kontakt kommen darf,
wobei
das Gehäuse (10) als Einweggehäuse ausgebildet ist, das nach einmaligem Gebrauch zum Entsorgen bestimmt ist,
**dadurch gekennzeichnet, dass**
das Gehäuse dadurch als Einweggehäuse ausgebildet ist, dass es eine flexible Außenwand aufweist, die dünnwandig ausgebildet ist und eine materialabhängige Stärke aufweist, die für einen Betriebsdruck von 2 bis 10 bar über dem Umgebungsdruck geeignet ist, wobei eine Versteifung des Gehäuses nicht durch die Außenwand des Gehäuses, sondern durch ein separates Versteifungselement erfolgt,
wobei das Gehäuse (10) einen Einlass (28) aufweist, durch den die zu filternde Lösung (16) dem Inneren des Gehäuses (10) zugeführt wird,
wobei in der Lösung (16) befindliche Partikel durch den Filter (12) zurückgehalten werden,
wobei das Versteifungselement ein steifer Filterkorb ist, der den Beutelfilter (12) umgibt und zwischen diesem und der flexiblen Außenwand angeordnet ist,
wobei das Gehäuse (10) ferner einen Auslass (30) aufweist, durch den das Filtrat das Gehäuse (10) verlässt.

2. Gehäuse für einen Einwegbeutelfilter (12) nach Anspruch 1, **dadurch gekennzeichnet, dass** der Einwegbeutelfilter (12) einstückig mit dem Einweggehäuse (10) ausgebildet ist.

3. Gehäuse für einen Einwegbeutelfilter (12) nach Anspruch 1, **dadurch gekennzeichnet, dass** das Einweggehäuse (10) eine Befestigungsvorrichtung (18), insbesondere einen austauschbaren Befestigungsadapter, zum Befestigen eines konventionellen Einwegbeutelfilters (12) im Inneren des Einweggehäuses (10) aufweist, wobei insbesondere Einwegbeutelfilter (12) verschiedener Hersteller und/oder Größen im Einweggehäuse (10) befestigbar sind.

4. Gehäuse für einen Einwegbeutelfilter (12) nach einem der Ansprüche 1 bis 3, **dadurch gekennzeichnet, dass** das Einweggehäuse (10) einen Einlass (28) und einen Auslass (30) zum Ein- und Auslassen der zu filternden Lösung (16) aufweist, wobei der Einlass und/oder Auslass mittels einer Verschließvorrichtung derart verschließbar sind, dass nach Durchführen der Filtration keine Lösung (16) aus dem Inneren des Einweggehäuses (10) nach außen entweichen kann.

5. Gehäuse für einen Einwegbeutelfilter (12) nach einem der Ansprüche 1 bis 4, **dadurch gekennzeichnet, dass** das Einweggehäuse (10) eine zweiteilige Einlasskappe aufweist, wobei sich das Einlasskappenoberteil (22a) in Richtung des Beutelfilters (12) weitet und sich zu einer Scheibe (32) verbreitert und die Einlassseite (34) des Einlasskappenunterteils (22b) ebenfalls scheibenförmig ausgebildet ist und eine insbesondere ringförmige Vertiefung (36) zur Befestigung eines konventionellen Einwegbeutelfilters (12) aufweist.

6. Gehäuse für einen Einwegbeutelfilter (12) nach Anspruch 5, **dadurch gekennzeichnet, dass** das scheibenförmige Einlasskappenoberteil (22a) und das Einlasskappenunterteil (22b) eine Vertiefung (38) aufweisen, in die eine Dichtung (40) aufgenommen ist.

7. Gehäuse für einen Einwegbeutelfilter (12) nach Anspruch 5 oder 6, **dadurch gekennzeichnet, dass** das scheibenförmige Einlasskappenoberteil (22a) und das Einlasskappenunterteil (22b) insbesondere durch eine Schelle (42) mechanisch miteinander verbunden sind, sodass eine Fixierung der Dichtung (40) und des Einwegbeutelfilters (12) zwischen ihnen erfolgt.

8. Gehäuse für einen Einwegbeutelfilter (12) nach einem der Ansprüche 1 bis 7, **gekennzeichnet durch** eine Einlasskappe (22), die sich in Richtung des Beutelfilters (12) weitet und insbesondere konisch oder domartig ausgebildet ist.

## Claims

1. A casing for a disposable bag filter (12) for filtering dispersed particles (14) from a turbid solution (16) which must not come into contact with the environment of the filter,
wherein
the casing (10) is configured as a disposable casing which is determined for disposal after onetime use,
**characterized in that**
the casing is configured as a disposable casing **in that** it comprises a flexible outer wall which is of thin-walled configuration and comprises a material-dependent thickness which is suitable for an operating pressure of 2 to 10 bars above the ambient pressure, wherein stiffening of the casing is not effected by the outer wall of the casing but by a separate stiffening element,
wherein the casing (10) comprises an inlet (28) through which the solution (16) to be filtered is supplied to the interior of the casing (10),
wherein particles in the solution (16) are retained by the filter (12),
wherein the stiffening element is a stiff filter cage which surrounds the bag filter (12) and is arranged between the latter and the flexible outer wall,
wherein the casing (10) further comprises an outlet (30) through which the filtered matter leaves the casing (10).

2. The casing for a disposable bag filter (12) according to claim 1, **characterized in that** the disposable bag filter (12) is integrally formed with the disposable casing (10).

3. The casing for a disposable bag filter (12) according to claim 1, **characterized in that** the disposable casing (10) comprises a fastening device (18), in particular an exchangeable fastening adapter, for fastening a conventional disposable bag filter (12) in the interior of the disposable casing (10), wherein in particular disposable bag filters (12) of various manufacturers and/or sizes are adapted to be fastened in the disposable casing (10).

4. The casing for a disposable bag filter (12) according to any one of claims 1 to 3, **characterized in that** the disposable casing (10) comprises an inlet (28) and an outlet (30) for admitting and discharging the solution (16) to be filtered, wherein the inlet and/or the outlet are adapted to be closed by means of a closing device such that, after the filtering has been carried out, no solution (16) can escape to the outside from the interior of the disposable casing (10).

5. The casing for a disposable bag filter (12) according to any one of claims 1 to 4, **characterized in that** the disposable casing (10) comprises a two-piece inlet cap, wherein the upper portion (22a) of the inlet cap expands towards the bag filter (12) und widens to form a disc (32) and the inlet side (34) of the lower portion (22b) of the inlet cap is also configured as a disc and comprises an in particular annular recess (36) for fastening a conventional disposable bag filter (12).

6. The casing for a disposable bag filter (12) according to claim 5, **characterized in that** the disc-shaped upper portion (22a) of the inlet cap and the lower portion (22b) of the inlet cap comprise a recess (38) in which a seal (40) is accommodated.

7. The casing for a disposable bag filter (12) according to claim 5 or 6, **characterized in that** the disc-shaped upper portion (22a) of the inlet cap and the lower portion (22b) of the inlet cap are in particular mechanically connected with each other by a clamp (42) such that fixing of the seal (40) and the disposable bag filter (12) is effected between them.

8. The casing for a disposable bag filter (12) according to any one of claims 1 to 7, **characterized by** an inlet cap (22) which expands towards the bag filter (12) and is in particular configured in the form of a cone or a dome.

## Revendications

1. Boîtier pour un filtre à sac à utilisation unique (12) destiné au filtrage de particules (14) dispersées à partir d'une solution (16) trouble qui ne doit pas entrer en contact avec l'environnement du filtre,
le boîtier (10) étant constitué en tant que boîtier à utilisation unique qui est destiné à être mis au rebut après une seule utilisation,
**caractérisé en ce que**
le boîtier est constitué en tant que boîtier à utilisation unique **en ce qu'**il présente une paroi extérieure flexible qui est constituée avec une paroi mince et qui présente une épaisseur qui est fonction du matériau et qui est adaptée à une pression de fonctionnement de 2 à 10 bars au-dessus de la pression ambiante, un renforcement du boîtier ne s'effectuant pas par la paroi extérieure du boîtier mais par un élément de renforcement séparé,
le boîtier (10) présentant une entrée (28) à travers laquelle la solution (16) à filtrer est acheminée vers l'intérieur du boîtier (10),
des particules situées dans la solution (16) étant retenues par le filtre (12),
l'élément de renforcement étant un panier-filtre rigide qui entoure le filtre à sac (12) et est disposé entre celui-ci et la paroi extérieure flexible,
le boîtier (10) présentant également une sortie (30) à travers laquelle le filtrat quitte le boîtier (10).

2. Boîtier pour un filtre à sac à utilisation unique (12) selon la revendication 1, **caractérisé en ce que** le filtre à sac à utilisation unique (12) est constitué d'un seul tenant avec le boîtier (10) à utilisation unique.

3. Boîtier pour un filtre à sac à utilisation unique (12) selon la revendication 1, **caractérisé en ce que** le boîtier (10) à utilisation unique présente un dispositif de fixation (18), en particulier un adaptateur de fixation remplaçable, destiné à la fixation d'un filtre à sac à utilisation unique (12) classique dans l'intérieur du boîtier (10) à utilisation unique, des filtres à sac à utilisation unique (12) de différents fabricants et/ou de différentes dimensions pouvant en particulier être fixés dans le boîtier (10) à utilisation unique.

4. Boîtier pour un filtre à sac à utilisation unique (12) selon l'une des revendications 1 à 3, **caractérisé en ce que** le boîtier (10) à utilisation unique présente une entrée (28) et une sortie (30) pour l'introduction et l'évacuation de la solution (16) à filtrer, l'entrée et/ou la sortie pouvant être fermées au moyen d'un dispositif de fermeture de telle sorte que, après la réalisation de la filtration, aucune solution (16) ne peut s'échapper vers l'extérieur en provenance de l'intérieur du boîtier (10) à utilisation unique.

5. Boîtier pour un filtre à sac à utilisation unique (12) selon l'une des revendications 1 à 4, **caractérisé en ce que** le boîtier (10) à utilisation unique présente un capuchon d'entrée en deux parties, la partie supérieure du capuchon d'entrée (22a) s'évasant en direction du filtre à sac (12) et s'élargissent en formant un disque (32), et le côté entrée (34) de la partie inférieure du capuchon d'entrée (22b) étant également constitué en forme de disque et présentant un creux (36), en particulier de forme annulaire, pour la fixation d'un filtre à sac à utilisation unique (12) classique.

6. Boîtier pour un filtre à sac à utilisation unique (12) selon la revendication 5, **caractérisé en ce que** la partie supérieure du capuchon d'entrée (22a) en forme de disque et la partie inférieure du capuchon d'entrée (22b) présentent un creux (38) dans lequel est logé un joint d'étanchéité (40).

7. Boîtier pour un filtre à sac à utilisation unique (12) selon la revendication 5 ou 6, **caractérisé en ce que** la partie supérieure du capuchon d'entrée (22a) en forme de disque et la partie inférieure du capuchon d'entrée (22b) sont raccordées l'une à l'autre mécaniquement en particulier par un collier (42) de telle sorte que le joint d'étanchéité (40) et le filtre à sac à utilisation unique (12) sont immobilisés entre elles.

8. Boîtier pour un filtre à sac à utilisation unique (12) selon l'une des revendications 1 à 7, **caractérisé par** un capuchon d'entrée (22) qui s'évase en direction du filtre à sac (12) et est en particulier constitué en forme de cône ou de dôme.
